(19) **Europäisches Patentamt / European Patent Office / Office européen des brevets**

(11) **EP 2 938 083 A1**

(12) # EUROPEAN PATENT APPLICATION

(43) Date of publication:
28.10.2015 Bulletin 2015/44

(51) Int Cl.:
*H04N 19/70* (2014.01)   *H04N 19/59* (2014.01)

(21) Application number: 14305602.6

(22) Date of filing: 24.04.2014

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(71) Applicant: Thomson Licensing
92130 Issy-les-Moulineaux (FR)

(72) Inventors:
• **Bordes, Philippe**
**35576 CESSON SEVIGNE (FR)**

• **Leleannec, Fabrice**
**35576 CESSON SEVIGNE (FR)**
• **Lasserre, Sebastien**
**35576 CESSON SEVIGNE (FR)**
• **Olivier, Yannick**
**35576 CESSON SEVIGNE (FR)**

(74) Representative: **Huchet, Anne**
**Technicolor**
**1, rue Jeanne d'Arc**
**92443 Issy-les-Moulineaux Cedex (FR)**

(54) **Method and device for processing an information data indicating that a frame contains samples of at least two distinct packed constituent frames according to a specific frame-packing-arrangement scheme**

(57) The present disclosure generally relates to a method for processing an information data indicating that a frame contains samples of at least two distinct packed constituent frames according to a specific frame-packing-arrangement scheme. The method is characterized in that it comprises defining that said information data indicates that one of the at least two distinct packed constituent frames corresponds to an LDR frame and another of the at least two distinct packed constituent frames corresponds to an HDR illumination frame associated with said LDR frame.

**Fig. 1**

**Description**

**1. Field.**

The present disclosure generally relates to frame encoding. Particularly, but not exclusively, the technical field of the present disclosure is related to encode a frame whose pixels values belong to a high-dynamic range.

**2. Background.**

The present section is intended to introduce the reader to various aspects of art, which may be related to various aspects of the present disclosure that are described and/or claimed below. This discussion is believed to be helpful in providing the reader with background information to facilitate a better understanding of the various aspects of the present invention. Accordingly, it should be understood that these statements are to be read in this light, and not as admissions of prior art.

In the following, a frame contains an array of samples in a specific format.

Low-Dynamic-Range frames (LDR frames) are frames whose *luma* samples are represented with a limited number of bits (most often 8 or 10). This limited representation does not allow correct rendering of small signal variations, in particular in dark and bright luminance ranges. In high-dynamic range frames (HDR frames), the signal representation is extended in order to maintain a high accuracy of the signal over its entire range. In HDR frames, *luma* samples are usually represented in floating-point format (either 32-bit or 16-bit for each component, namely float or half-float), the most popular format being openEXR half-float format (16-bit per RGB component, i.e. 48 bits per sample) or in integers with a long representation, typically at least 16 bits.

A typical approach for encoding an HDR frame is to obtain an illumination frame (also called illumination map or backlight frame/image) from the HDR frame. A residual frame is then obtained by dividing the HDR frame by the illumination frame and both the illumination frame and the residual frame are directly encoded.

Encoding an HDR frame using one of these two approaches leads to encode two components: a LDR frame (the residual frame), which may be a viewable frame and an associated HDR illumination frame. A decoded version of the input HDR frame is then obtained from a decoded version of the LDR frame and a decoded version of the associated illumination frame.

These two frames may have different formats (YUV, RGB, XYZ,...) and have not necessary the same format. For example, the associated illumination frame may be monochrome and the LDR frame format may be YUV or RGB.

The problem to be solved by the disclosure is to store or convey over a communication network in a convenient way the LDR and the associated illumination frame.

**3. Summary.**

In light of the foregoing, aspects of the present disclosure are directed to creating and maintaining semantic relationships between data objects on a computer system. The following presents a simplified summary of the disclosure in order to provide a basic understanding of some aspects of the disclosure. This summary is not an extensive overview of the disclosure. It is not intended to identify key or critical elements of the disclosure. The following summary merely presents some aspects of the disclosure in a simplified form as a prelude to the more detailed description provided below.

The disclosure sets out to remedy some of the drawbacks of the prior art with a method for processing an information data indicating that a frame contains samples of at least two distinct packed constituent frames according to a specific frame-packing-arrangement scheme, characterized in that said method comprises defining that said information data indicates that one of the at least two distinct packed constituent frames corresponds to an LDR frame and another of the at least two distinct packed constituent frames corresponds to an HDR illumination frame associated with said LDR frame.

According to an embodiment, the method further comprises defining that said information data ID indicates that the LDR and the associated HDR illumination frames do not have a same size and/or have specific positions in the frame.

According to an embodiment, the method further comprises defining that said information data ID indicates a size and/or a position of the LDR frame and/or a size and/or a position of the associated HDR illumination frame.

According to an embodiment, the specific frame packing arrangement scheme indicates that either the LDR frame and/or the associated HDR illumination frame is split in several pieces, and indicates the position of each piece in the frame.

According to another of its aspects, the present disclosure relates to a method for encoding an LDR frame and an associated HDR illumination frame in a bitstream, characterized in that the method comprises:

- packing the LDR frame and the associated HDR illumination frame in a single frame according to a specific frame-packing-arrangement scheme;
- encoding the single frame; and
- processing an information data according to a method mentioned above.

According to another of its aspects, the present disclosure relates to a method for decoding a bitstream representing an LDR frame and an associated HDR illumination frame comprising decoding, at least partially, the bitstream to get a decoded frame, characterized in that the method further comprises:

- obtaining an information data indicating that the decoded frame contains samples of at least two distinct packed constituent frames according to a specific frame-packing-arrangement scheme;
- checking if the information data indicates that one of the at least two distinct packed constituent frames corresponds to an LDR frame and another of the at least two distinct packed constituent frames corresponds to an HDR illumination frame associated with said LDR frame; and
- obtaining the LDR frame and the associated HDR illumination frame from the decoded frame according to the specific frame-packing-arrangement scheme.

According to another of its aspects, the present disclosure relates to a device for processing an information data indicating that a frame contains samples of at least two distinct packed constituent frames according to a specific frame-packing-arrangement scheme, characterized in that said device comprises processing means configured to define that said information data indicates that one of the at least two distinct packed constituent frames corresponds to an LDR frame and another of the at least two distinct packed constituent frames corresponds to an HDR illumination frame associated with said LDR frame.

According to another of its aspects, the present disclosure relates to a device for encoding LDR and the associated HDR illumination frames comprising processing means for:

- packing the LDR and the associated HDR illumination frames in a single frame according to a specific frame-packing-arrangement scheme;
- encoding the single frame; and
- processing of an information data according to one of the claims 1-4.

According to another of its aspects, the present disclosure relates to a device for decoding a bitstream representing LDR and the associated HDR illumination frames comprising a decoder for decoding, at least partially, the bitstream to get a decoded frame, characterized in that the device further comprises processing means configured to:

- obtain an information data indicating that the decoded frame contains samples of at least two distinct packed constituent frames according to a specific frame-packing-arrangement scheme;
- check if the information data indicates that one of the at least two distinct packed constituent frames corresponds to an LDR frame and another of the at least two distinct packed constituent frames corresponds to an HDR illumination frame associated with said LDR frame; and
- obtain the LDR and the associated HDR illumination frames from the decoded frame according to the specific frame-packing-arrangement scheme.

According to another of its aspects, the present disclosure relates to a computer program product, a processor readable medium, a non-transitory storage medium and a signal.
The specific nature of the disclosure as well as other objects, advantages, features and uses of the disclosure will become evident from the following description of embodiments taken in conjunction with the accompanying drawings.

## 4. Brief Description of Drawings

In the drawings, an embodiment of the present invention is illustrated. It shows:

- **Fig. 1** shows a block diagram of the steps of a method for encoding LDR and the associated HDR illumination frames in accordance with an embodiment of the disclosure;
- **Fig. 2** represents a block diagram of a method for decoding a bitstream representing LDR and the associated HDR illumination frames in accordance with an embodiment of the disclosure;
- **Fig. 3** shows an example of the syntax of a SEI message according to an embodiment of the disclosure;
- **Fig. 4** shows a table given an interpretation of the flag "content_interpretation_type" of **Fig. 3;**
- **Fig. 5** shows a table given an interpretation of the flag "frame_packing_arrangement_type" of **Fig. 3;**
- **Fig. 6** shows an example of a frame-packing-arrangement scheme according to an embodiment of the disclosure;
- **Fig. 7** shows an example of a frame-packing-arrangement scheme according to an embodiment of the disclosure;
- **Fig. 8** shows an example of a frame-packing-arrangement scheme according to a variant of an embodiment of the disclosure;
- **Fig. 9** shows a block diagram of the steps of an embodiment of the method in accordance with an embodiment of the disclosure;
- **Fig. 10** shows a block diagram of a step of the method in accordance with an embodiment of the invention;
- **Fig. 11** shows a block diagram of a step of the method in accordance with an embodiment of the disclosure;
- **Fig. 12** shows a block diagram of a step of the method in accordance with an embodiment of the disclosure;
- **Fig. 13** shows a block diagram of the steps of a method, in accordance with an embodiment of the disclosure, for decoding a bitstream representing LDR and the associated HDR illumination frames;

- **Fig. 14** shows an example of an architecture of a device in accordance with an embodiment of the disclosure; and

- **Fig. 15** shows two remote devices communicating over a communication network in accordance with an embodiment of the disclosure.

Similar or same elements are referenced with the same reference numbers.

**5. Description of Embodiments.**

The present disclosure will be described more fully hereinafter with reference to the accompanying figures, in which embodiments of the disclosure are shown. This disclosure may, however, be embodied in many alternate forms and should not be construed as limited to the embodiments set forth herein. Accordingly, while the disclosure is susceptible to various modifications and alternative forms, specific embodiments thereof are shown by way of example in the drawings and will herein be described in detail. It should be understood, however, that there is no intent to limit the disclosure to the particular forms disclosed, but on the contrary, the disclosure is to cover all modifications, equivalents, and alternatives falling within the spirit and scope of the disclosure as defined by the claims.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises", "comprising," "includes" and/or "including" when used in this specification, specify the presence of stated features, integers, steps, operations, elements, and/or components but do not preclude the presence or addition of one or more other features, integers, steps, operations, elements, components, and/or groups thereof. Moreover, when an element is referred to as being "responsive" or "connected" to another element, it can be directly responsive or connected to the other element, or intervening elements may be present. In contrast, when an element is referred to as being "directly responsive" or "directly connected" to other element, there are no intervening elements present. As used herein the term "and/or" includes any and all combinations of one or more of the associated listed items and may be abbreviated as"/".

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element without departing from the teachings of the disclosure.

Although some of the diagrams include arrows on communication paths to show a primary direction of communication, it is to be understood that communication may occur in the opposite direction to the depicted arrows.

Some embodiments are described with regard to block diagrams and operational flowcharts in which each block represents a circuit element, module, or portion of code which comprises one or more executable instructions for implementing the specified logical function(s). It should also be noted that in other implementations, the function(s) noted in the blocks may occur out of the order noted. For example, two blocks shown in succession may, in fact, be executed substantially concurrently or the blocks may sometimes be executed in the reverse order, depending on the functionality involved.

Reference herein to "one embodiment" or "an embodiment" means that a particular feature, structure, or characteristic described in connection with the embodiment can be included in at least one implementation of the disclosure. The appearances of the phrase "in one embodiment" or "according to an embodiment" in various places in the specification are not necessarily all referring to the same embodiment, nor are separate or alternative embodiments necessarily mutually exclusive of other embodiments.

Reference numerals appearing in the claims are by way of illustration only and shall have no limiting effect on the scope of the claims.

While not explicitly described, the present embodiments and variants may be employed in any combination or sub-combination.

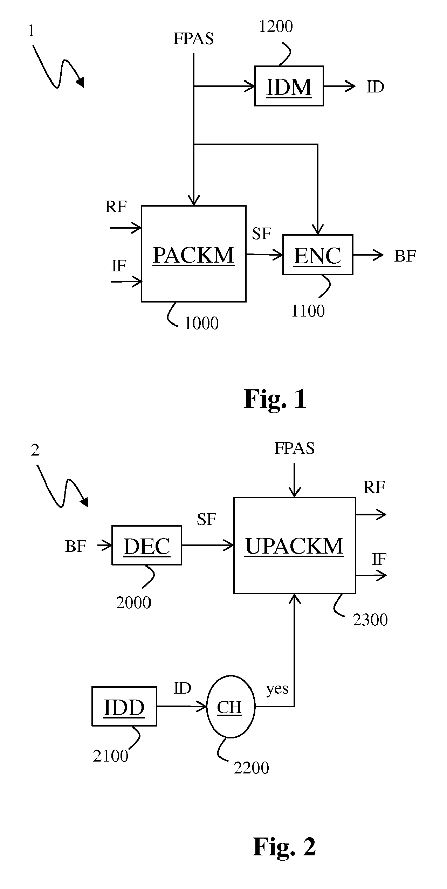

**Fig. 1** shows a block diagram of the steps of a method for encoding LDR and the associated HDR illumination frames in accordance with an embodiment of the disclosure.

It is well-known methods for determining an LDR frame and an associated HDR illumination frame from an input HDR frame to be encoded. (« High Dynamic Range video coding", JCTVC-P0159, San José, US, 9-17 Jan. 2014.)

An HDR illumination frame IF gathers illumination data relative to the samples of an HDR frame. For example, the illumination frame may comprise a triplet of illumination values for each sample of the HDR frame, each value of a triplet being an illumination value for a color component value of a sample. The illumination frame IF may be either a backlight frame or a low-frequency version of the luminance component of an HDR frame but the disclosure is not limited to any specific representation of illumination values relative to a frame to be encoded.

The LDR frame is usually a residual frame RF obtained from an HDR frame and the associated HDR illumination frame IF. Usually, the residual frame RF is obtained by dividing the HDR frame by the associated HDR illumination frame IF.

According to an embodiment, a second residual frame is obtained by subtracting an encoded/decoded version of the LDR frame from the HDR frame. This second residual frame is called the second LDR frame in the following. According to a last embodiment, this second residual frame is obtained by dividing the HDR frame by the LDR frame. The second residual frame then consists in ratio residual information between the HDR frame and the LDR frame.

In step 1000, a module PACKM is configured to pack the LDR frame and the associated HDR illumination frame (and possibly at least another frame such as the second residual frame) in a single frame SF according to a specific frame-packing-arrangement scheme FPAS.

In the following, only the case where the LDR frame and the associated HDR illumination frame is disclosed but it is obvious to extend the following disclosure to packing more than two frames in the single frame SF.

In step 1100, an encoder ENC encodes the frame SF into a bitstream BF.

According to an embodiment, the single frame SF is encoded according to encoding parameters which depend on the specific frame-packing-arrangement scheme.

According to a variant of this embodiment, the encoding parameters are defined in order that the single frame be encoded in two distinct slices, one containing the LDR frame RF and the other slice containing the associated HDR illumination frame IF. These slices may also take the form of slice groups, tiles, tile groups, precincts, according to the standard encoding scheme employed (H.264/AVC, HEVC, JPEG2000).

Note that in the following, reference to H.264/AVC corresponds to "Advanced video coding for generic audiovisual Services", SERIES H: AUDIOVISUAL AND MULTIMEDIA SYSTEMS, Recommendation ITU-T H.264, Telecommunication Standardization Sector of ITU, February 2014, and reference to HEVC corresponds to "High Efficiency Video Coding", SERIES H: AUDIOVISUAL AND MULTIMEDIA SYSTEMS, Recommendation ITU-T H.265, Telecommunication Standardization Sector of ITU, April 2013).

This variant is advantageous because it allows that a specific processing, such a specific encoding, be applied on the associated HDR illumination frame IF, respectively the LDR frame RF, and not on the LDR frame, respectively the associated HDR illumination frame IF.

The bitstream BF comprises thus the frame SF which contains samples of two distinct packed constituent frames: the LDR frame RF and the associated HDR illumination frame IF.

The bitstream BF may be stored on a local or remote memory and/or transmitted through a communication interface (e.g. to a bus or over a communication network or a broadcast network).

In step 1200, a module IDM processes an information data ID indicating that the frame SF contains samples of at least two distinct packed constituent frames according to a specific frame-packing-arrangement scheme.

The information data ID comprises at least one flag.

The module IDM is further configured to specify that the information data indicates that one of the at least two distinct packed constituent frames corresponds to an LDR frame RF and another of the at least two distinct packed constituent frames corresponds to an HDR illumination frame IF associated with said LDR frame RF.

According to an embodiment, the information data ID further indicates that another of the at least two distinct packed constituent frames corresponds to another frame such as for example a residual frame obtained by subtracting an encoded/decoded version of the LDR frame from the LDR frame.

According to an embodiment, the information data ID identifies the specific frame-packing-arrangement scheme. Then, encoding parameters may by such a specific constrained to the specific frame-packing-arrangement scheme.

According to an embodiment of the step 1200, the module IDM is further configured to define that the information data ID indicates that the LDR and the associated HDR illumination frames do not have the same size (do not have the same numbers of rows or the same number of columns or both) and/or have specific positions in the frame SF.

According to an embodiment of the step 1200, the module IDM is further configured to define that the information data ID indicates the size (number of rows and number of columns) and/or a position of the LDR frame and/or the size and/or a position of the associated HDR illumination frame.

According to an embodiment of the step 1200, the specific-frame-packing-arrangement scheme indicates that either the LDR frame and/or the associated HDR illumination frame is split in several pieces, and the module IDM is then configured to add, in the information data ID, at least one parameter to indicate the position of each piece in the frame SF.

According to an embodiment of the disclosure, the information data ID may be stored on a local or remote memory and/or transmitted through a communication interface (e.g. to a bus or over a communication network or a broadcast network).

According to an embodiment of the disclosure, the bitstream BF and the information data ID are transmitted over different communication interface (to different bus or over different communication network or broadcast network).

According to an embodiment of the disclosure the information data and the bitstream BF are transmitted in an asynchronous way.

According to an embodiment of the disclosure, the information data ID is encoded into the bitstream BF.

Fig. 2 represents a block diagram of a method for decoding a bitstream BF representing LDR and the associated HDR illumination frames in accordance with an embodiment of the disclosure.

The bitstream BF may be obtained by the method as described in relation with **Fig. 1**.

In step 2000, a decoder DEC obtains a decoded frame SF by decoding a bitstream BF at least partially.

The decoder DEC is configured to decode data which have been encoded by the encoder ENC.

The encoder ENC (and decoder DEC) is not limited to a specific encoder (decoder) but when an entropy encoder (decoder) is required, an entropy encoder such as a Huffmann coder, an arithmetic coder or a context adaptive coder like Cabac used in ITU-T Recommendation H264/AVC or HEVC is advantageous.

The encoder ENC (and decoder DEC) is not limited to a specific encoder which may be, for example, an image/video coder with loss like JPEG, JPEG2000, MPEG2, H264/AVC or HEVC.

In step 2100, a module IDD obtains an information data ID indicating that the decoded frame contains samples of at least two distinct packed constituent frames according to a specific frame-packing-arrangement scheme FPAS.

According to an embodiment, the specific frame-packing-arrangement scheme FPAS is defined by the information data ID or obtained from a memory.

In step 2200, a module CH checks if the information data ID indicates that one of the at least two distinct packed constituent frames corresponds to an LDR frame and another of the at least two distinct packed constituent frames corresponds to an HDR illumination frame associated with said LDR frame.

When the information data indicates that one of the at least one distinct packed constituent frames corresponds to an LDR frame and another of the at least one distinct packed constituent frames corresponds to an HDR illumination frame associated with said LDR frame, in step 2300, a module UPACKM obtains from the decoded single frame SF both the LDR and the associated HDR illumination frames according to the specific frame-packing-arrangement scheme FPAS.

The LDR and the associated illumination frames are then used, for example, for obtaining an HDR frame according to a method as defined, for example, by the information data ID.

According to an embodiment, the decoded frame is decoded according to decoding parameters which depend on the specific frame-packing-arrangement scheme FPAS.

According to an embodiment of the disclosure, the information data is a SEI (Supplementary Enhancement Information message).

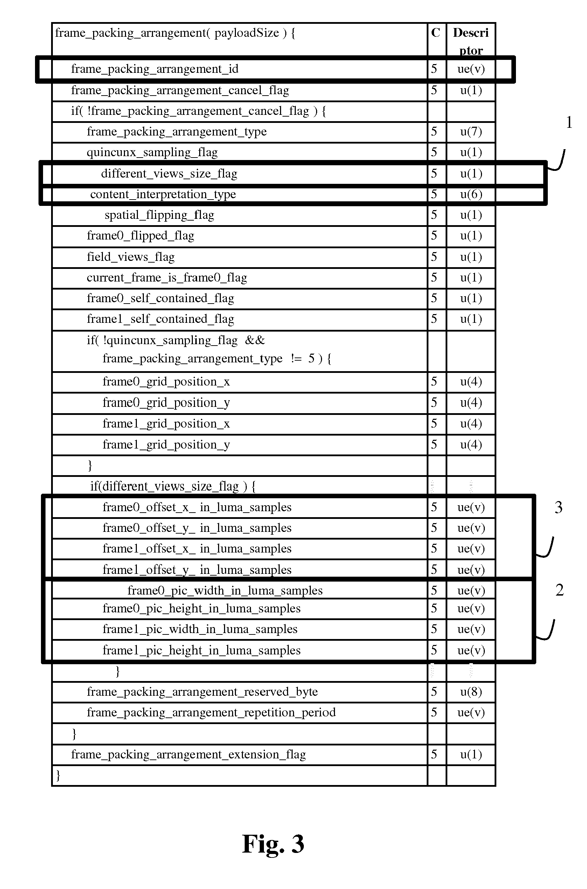

**Fig. 3** shows an example of the syntax of a SEI message according to an embodiment of the disclosure.

The syntax of the SEI message is an extension of the syntax of the frame-packing-arrangement SEI message as defined by the above cited ITU-T Recommendation H.264.

Briefly, the frame-packing-arrangement SEI message informs a decoder that the output decoded frame contains samples of multiple distinct spatially packed constituent frames using an indicated frame-packing-arrangement scheme. This information can be used by the decoder to appropriately rearrange the samples and process the samples of the constituent frames appropriately for display or other purposes.

The syntax of the SEI message in **Fig. 3** is given by the table of the section D.1.25 of the cited ITU-T Recommendation H.264.(and also by HEVC).

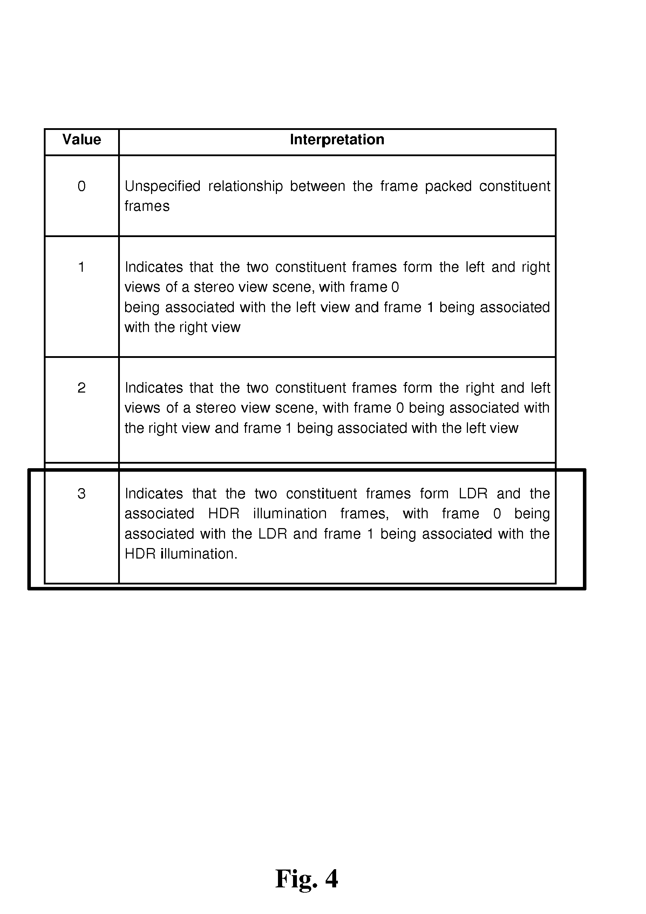

**Fig. 4** shows a table given an interpretation of the flag "content_interpretation_type" of **Fig. 3**.

The flag "content_interpretation_type" may be equal to three values (0-2) as defined in the cited ITU-T Recommendation H.264 (table D-10).

According to an embodiment of the disclosure, this flag may also equal to a specific value (here 3) indicating that one of at least two distinct packed constituent frames corresponds to an LDR frame and another of the at least two distinct packed constituent frames corresponds to an HDR illumination frame associated with said LDR frame.

According to a variant, this specific value of the flag "content_interpretation_type" may further indicate a post-processing to be applied after the decoding of the frame SF in order, for example, to retrieve the HDR frame from the decoded LDR and the associated illumination frames for example.

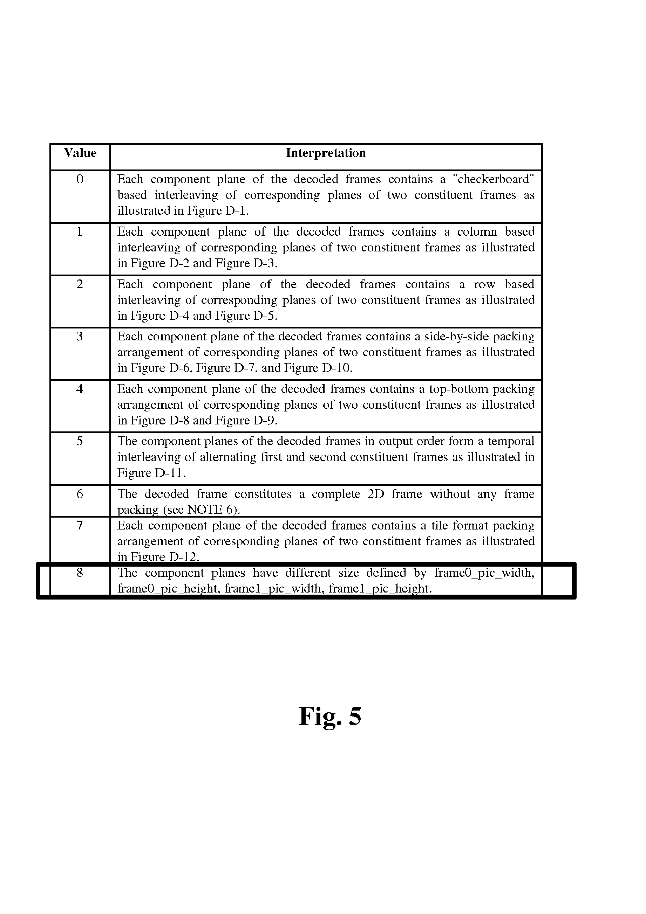

**Fig. 5** shows a table given an interpretation of the flag "frame_packing_arrangement_type" of **Fig. 3**.

Each value of the flag defines a specific frame-packing-arrangement scheme. The flag may be equal to height values (0-7) as defined in the cited ITU-T Recommendation H.264 (table D-9).

According to an embodiment of the disclosure, this flag may equal to a specific value (here 8) to indicate that the LDR and the associated HDR illumination frames do not have a same size and/or have specific positions in the frame SF.

This flag may further indicate that different sizes and/or positions are defined by at least one additional flag.

According to a variant, the size of the LDR frame, respectively the associated illumination frame, is defined by additional flag in the SEI message while the size of the associated illumination frame, respectively the LDR frame, can be derived from the SPS (Sequence Parameters Set) and the size of the LDR frame, respectively the associated illumination frame. Note the SPS contains the size of the frame SF.

A first additional flag 1, entitled "different_views_size_f!ag", is added in the syntax of the SEI message to indicate that the LDR and the associated HDR illumination frames do not have the same size and/or have specific position in the frame SF.

A set of additional parameters 2 is added in the syntax of the SEI message to indicate the size (width and height) of the LDR frame and of the size of the associated HDR illumination frame: the value "frame0_pic_width_in_luma_samples" indicates the number of columns of the frame0 from its top left corner, the value "frame0_pic_height_in_luma_samples" indicates the number of rows of the frame0 from its top left corner, the flag "frame1_pic_width_in_luma_samples" indicates the number of columns of the frame1 from its top left corner, and the flag "frame1_pic_height_in_luma_samples" indicates the number of rows of the frame1 from its top left corner.

A set of additional parameters 3 is added in the syntax of the SEI message to indicate the position of the LDR frame and of the position of the associated HDR illumination frame in the frame SF: the value "frame0_offset_x_in_luma_samples" indicates an offset from the first row of the frame SF, the value "frame0_ofiset_y_in_luma_samples" indicates an offset from the first column of the frame SF, the value "frame1_offset_x_in_luma_samples" indicates an offset from the first row of the frame SF, and the value "frame1_offset_y_in_luma_samples" indicates an offset from the first column of the frame SF.

In **Fig. 3,** the frame0 refers to the LDR frame LDRF, respectively to the associated HDR illumination frame IF, and the frame1 refers to the associated HDR illumination frame IF, respectively to the LDR frame LDRF.

According to an embodiment, the flag "frame_packing_arrangement_type" may be equal to a specific value to constrain an encoder to encode the frame SF according to a specific frame-packing-arrangement FPAS.

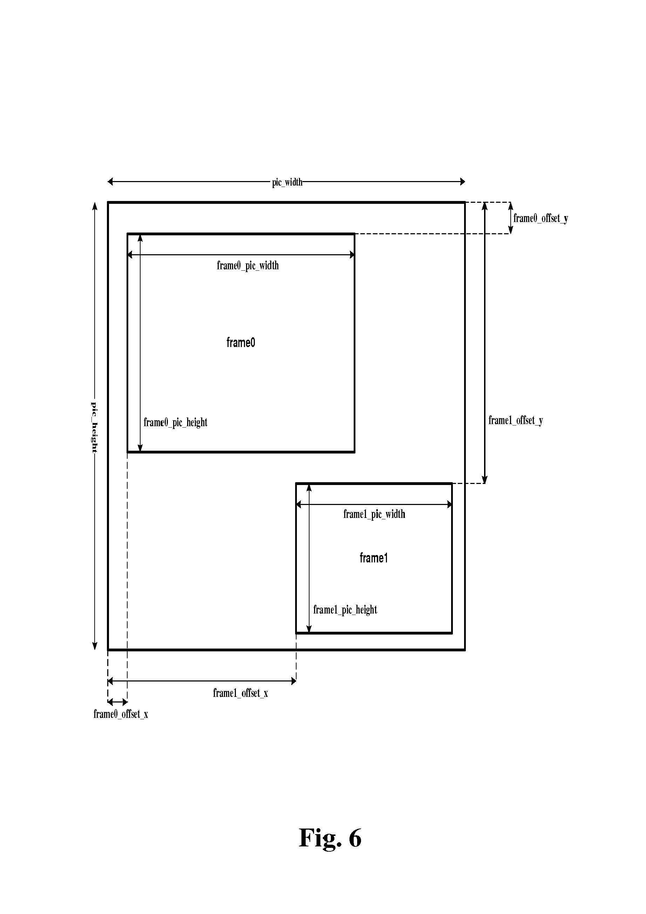

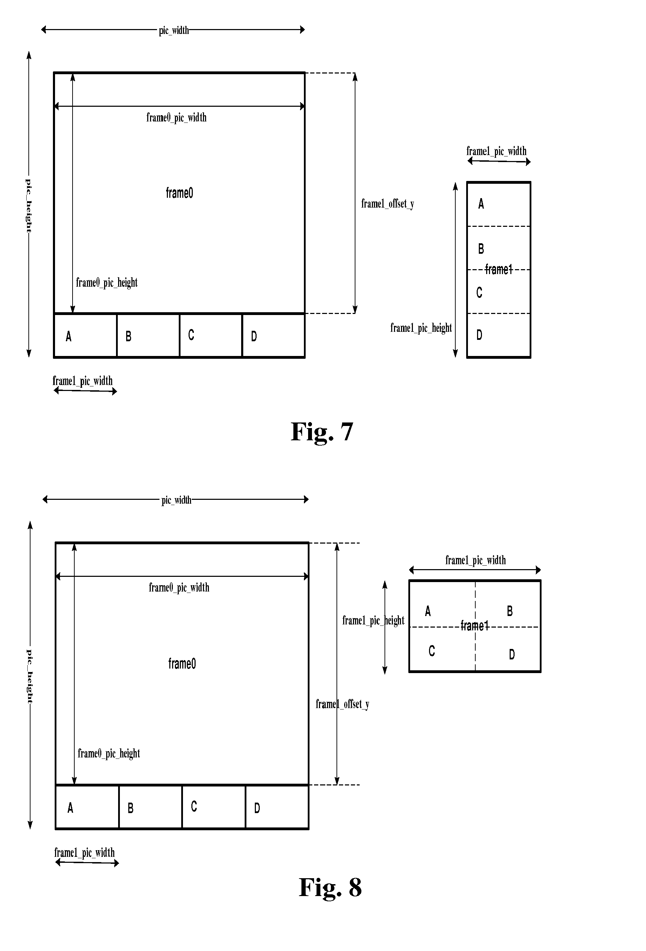

For example, the encoder may be constrained to encode the frame SF slice by slice (as shown in **Fig. 6, 7** or **8** for example) or to have tiles boundaries coinciding with the frame SF as shown in **Fig. 7** and **8**.

According to an embodiment, the flag "frame_packing_arrangement_type" indicates a specific frame packing arrangement scheme FPAS in which either the LDR frame and/or the associated HDR illumination frame is split in several pieces. The specific frame-packing-arrangement scheme FPAS further indicates the position of each piece in the frame SF.

Fig. 7 shows an example of such a frame-packing-arrangement scheme according to this embodiment.

According to this frame-packing-arrangement scheme, the frame1 (either the LDR frame or the associated HDR illumination frame) is split into four slices (pieces) and the slices are located in the bottom of the frame SF.

Fig. 8 shows a variant of the frame-packing-arrangement scheme of the **Fig. 7.**

Here, four sub-frames are obtained by downsampling the frame1 along the two directions.

The scope of the disclosure is not limited to the disclosed frame-packing-arrangement schemes but extends to any frame-packing-arrangement scheme to pack two frames in a single frame.

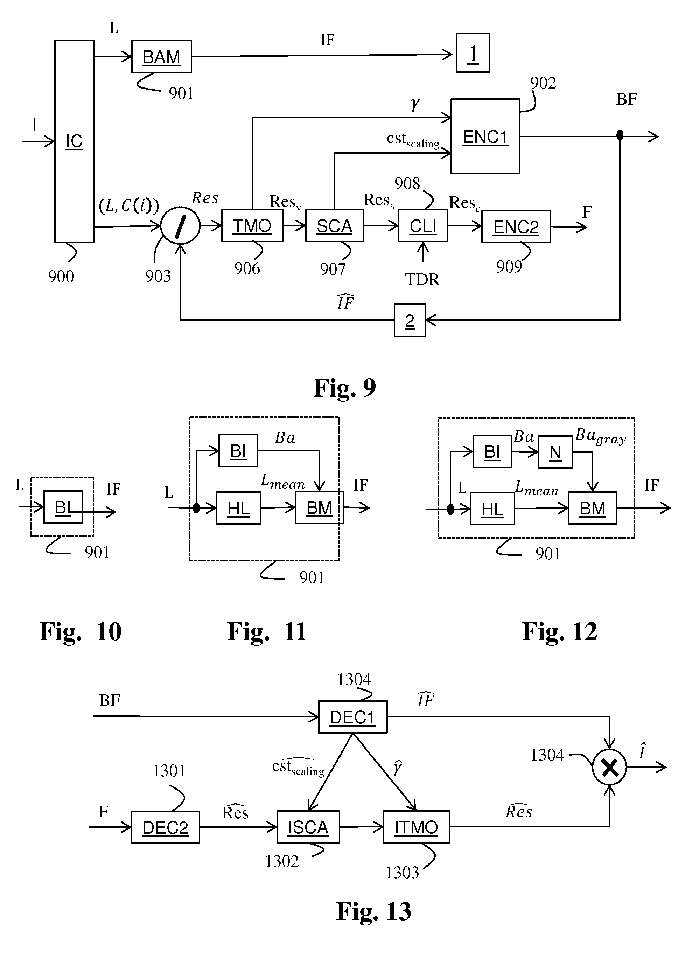

**Fig. 9** shows a block diagram of the steps of an embodiment of the method in accordance with an embodiment of the disclosure.

In accordance with this embodiment, the method is adapted to encode an HDR frame but may extend to encode a sequence of HDR frames (video) because each frame of the sequence is sequentially encoded as described below.

In step 900, a module IC obtains the luminance component L and potentially at least one color component C(i) of the HDR frame I to be encoded.

For example, when the HDR frame I belongs to the color space (X,Y,Z), the luminance component L is obtained by a transform f(.) of the component Y, e.g. L=f(Y).

When the HDR frame I belongs to the color space (R,G,B), the luminance component L is obtained, for instance in the 709 gamut, by a linear combination which is given by:

$$L=0.2127.R+0.7152.G+0.0722.B$$

In step 901, a module BAM determines the HDR illumination frame IF from the luminance component L of the HDR frame I.

According to an embodiment of the step 901, illustrated in **Fig. 10**, a module BI determines a backlight frame Ba as being a weighted linear combination of shape functions $\psi_i$ given by:

$$Ba = \sum_i a_i \psi_i \qquad (1)$$

with $\alpha_i$ being weighting coefficients.

Thus, determining a backlight frame Ba from a luminance component L consists in finding optimal weighting coefficients (and potentially also optimal shape functions if not known beforehand) in order that the backlight frame Ba fits the luminance component L.

There are many well-known methods to find the weighting coefficients $a_i$. For example, one may use a least mean square method to minimize the mean square error between the backlight frame Ba and the luminance component L.

It may be noted that the shape functions may be the true physical response of a display backlight (made of LED's for instance, each shape function then corresponding to the response of one LED) or may be a pure mathematical construction in order to fit the luminance component at best.

According to this embodiment, the HDR illumination frame IF, output from step 901, is the backlight frame Ba given by equation (1).

According to an embodiment of the step 901, illustrated in **Fig. 11,** a module BM modulates the backlight frame Ba (given by equation (1)) with a mean luminance value $L_{mean}$ of the HDR frame I obtained by the means of a module HL.

According to this embodiment, the HDR illumination frame IF, output from step 901, is the modulated backlight frame.

According to an embodiment, the module HL is configured to calculate the mean luminance value $L_{mean}$ over the whole luminance component L.

According to an embodiment, the module HL is configured to calculate the mean luminance value $L_{mean}$ by

$$L_{mean} = E\left(L^{\beta}\right)^{\frac{1}{\beta}}$$

with β being a coefficient less than 1 and E(X) the mathematical expectation value (mean) of the luminance component L.

This last embodiment is advantageous because it avoids that the mean luminance value $L_{mean}$ be influenced by a few pixels with extreme high values which usually leads to very annoying temporal mean brightness instability when the HDR frame I belongs to a sequence of images.

The invention is not limited to a specific embodiment for calculating the mean luminance value $L_{mean}$.

According to a variant of this embodiment, illustrated in **Fig. 12,** a module N normalizes the backlight image Ba (given by equation (1)) by its mean value E(Ba) such that one gets a mid-gray-at-one backlight image $Ba_{gray}$ for the HDR frame (or for all HDr frames if the HDR frame I belongs to a sequence of frames):

$$Ba_{gray} = \frac{Ba}{E(Ba)}$$

Then, the module BM is configured to modulate the mid-gray-at-one backlight image $Ba_{gray}$ with the low-spatial-frequency version $L_{lf}$ of the HDR frame I, by using the following relation

$$Ba_{mod} \approx cst_{mod}.L_{lf}{}^{\alpha}.Ba_{gray} \qquad (2)$$

with $cst_{mod}$ being a modulation coefficient and α being another modulation coefficient less than 1, typically 1/3.

According to this variant, the HDR illumination frame IF, output from step 901, is the modulated backlight image $Ba_{mod}$ given by equation (2).

It may be noted that the modulation coefficient $cst_{mod}$ is tuned to get a good looking brightness for the residual frame and highly depends on the process to obtain the backlight frame. For example, $cs_{tmod} \approx 1.7$ for a backlight frame obtained by least means squares.

Practically, by linearity, all operations to modulate the backlight image apply to the backlight coefficients $a_i$ as a correcting factor which transforms the coefficients $a_i$ into new coefficients $\tilde{a}_i$, such that one gets

$$Ba_{mod} = \sum_i \widetilde{a}_i \psi_i$$

The illumination frame IF is then processed by a module 1 as described with a method in relation with **Fig. 1**.

In step 903, an residual frame Res is calculated by dividing the HDR frame I by a decoded version $\widehat{IF}$ of the HDR illumination frame IF.

It is advantageous to use the decoded version $\widehat{IF}$ of the HDR illumination frame IF to ensure a same HDR illumination data on both encoder and decoder side, thus leading to a better precision of a final decoded HDR frame Î.

More precisely, the luminance component L and potentially each colour component C(i) of the HDR frame I, obtained from the module IC, is divided by the decoded version $\widehat{IF}$ of the HDR illumination frame IF. This division is done pixel per pixel.

For example, when the components R, G or B of the HDR frame I are expressed in the color space (R,G,B), the component $R_{Res}$, $G_{Res}$ and $B_{Res}$ are obtained as follows:

$$R_{res} = R/\widehat{Ba}, \quad G_{res} = G/\widehat{Ba}, \quad B_{res} = B/\widehat{Ba},$$

For example, when the components X, Y or Z of the HDR frame I are expressed in the color space (Y,Y,Z), the component $X_{Res}$, $Y_{Res}$ and $Z_{Res}$ are obtained as follows:

$$X_{res} = X/\widehat{IF} \qquad Y_{res} = Y/\widehat{IF} \qquad Z_{res} = Z/\widehat{IF}$$

According to an embodiment, in step 904, the decoded version $\widehat{IF}$ of the HDR illumination frame IF is obtained by decoding at least partially the bitstream BF by means of a module 2 as described in relation with Fig. 2.

In step 906, a module TMO tone-maps the residual frame Res in order to get a viewable LDR frame $Res_v$.

It may appear that the residual image Res may not be viewable because its dynamic range is too high and because a decoded version of this residual image Res shows too visible artifacts. Tone-mapping the residual image remedies to at least one of these drawbacks.

The invention is not limited to any specific tone-mapping operator. This single condition is that the tone-mapping operator shall be reversible.

For example, the tone-mapping operator defined by Reinhard may be used (Reinhard, E., Stark, M., Shirley, P., and Ferwerda, J., \Photographic tone reproduction for digital images, " ACM Transactions on Graphics 21 (July 2002)), or Boitard, R., Bouatouch, K., Cozot, R., Thoreau, D., & Gruson, A. (2012). Temporal coherency for video tone mapping. In A. M. J. van Eijk, C. C. Davis, S. M. Hammel, & A. K. Majumdar (Eds.), Proc. SPIE 8499, Applications of Digital Image Processing (p. 84990D-84990D-10)).

In step 909, the viewable LDR frame $Res_v$ is encoded by means of an encoder ENC2 in a bitstream F which may be stored on a local or remote memory and/or transmitted through a communication interface (e.g. on a bus or over a communication network or a broadcast network).

According to an embodiment of the step 906, tone mapping the residual frame comprises either a gamma correction or a SLog correction according to the pixel values of the residual frame.

The viewable LDR frame $Res_v$ is then given, for example, by:

$$Res_v = A.Res^\gamma$$

with A being a constant value, $\gamma$ being a coefficient of a gamma curve equal, for example, to 1/2.4.

Alternatively, the viewable LDR frame $Res_v$ is given, for example, by:

$$Res_v = a.\ln(Res + b) + c$$

with a,b and c being coefficients of a SLog curve determined such that 0 and 1 are invariant, and the derivative of the SLog curve is continuous in 1 when prolonged by a gamma curve below 1. Thus, a,b and c are functions of the parameter $\gamma$.

According to an embodiment, the parameter $\gamma$ of the gamma-Slog curve is encoded in the bitstream BF by means of an encoder ENC1 (step 902).

Applying a gamma correction on the residual frame Res, pulls up the dark regions but does not lower enough high lights to avoid burning of bright pixels.

Applying a SLog correction on the residual frame Res lowers enough high lights but does not pull up the dark regions.

Then, according to a preferred embodiment of the step 906, the module TMO applies either the gamma correction or the SLog correction according to the pixel values of the residual frame Res.

For example, when the pixel value of the residual frame Res is below a threshold (equal to 1), then the gamma correction is applied and otherwise the SLog correction is applied.

By construction, the viewable LDR frame $Res_v$ usually has a mean value more or less close to 1 depending on the brightness of the HDR frame I, making the use of the above gamma-Slog combination particularly efficient.

According to an embodiment of the method, in step 907, a module SCA scales the viewable residual frame $Res_v$ before encoding (step 19) by multiplying each component of the viewable LDR frame $Res_v$ by a scaling factor $cst_{scaling}$. The resulting LDR frame $Res_s$ is then given by

$$Res_s = cst_{scaling}.Res_v$$

In a specific embodiment, the scaling factor $cst_{scaling}$ is defined to map the values of the viewable LDR frame $Res_v$ between from 0 to the maximum value $2^N-1$, where N is the number of bits allowed as input for the coding by the encoder ENC2.

This is naturally obtained by mapping the value 1 (which is roughly the mean value of the viewable LDR frame $Res_v$) to the mid-gray value $2^{N-1}$. Thus, for a viewable LDR frame $Res_v$ with a standard number of bits N=8, a scaling factor equal to 120 is a very consistent value because very closed to the neutral gray at $2^7= 128$.

According to this embodiment of the method, in step 909, the LDR frame $Res_s$ is encoded by means of an encoder ENC2.

According to an embodiment of the method, in step 908, a module CLI clips the viewable LDR frame $Res_v$ before encoding to limit its dynamic range to a targeted dynamic range TDR which is defined, for example, according to the capabilities of the encoder ENC2.

According to this last embodiment, the resulting LDR frame $Res_c$ is given, for example, by:

$$Res_c = max(2^N, Res_v)$$

$$Res_c = max(2^N, Res_s)$$

according to the embodiments of the method.

The invention is not limited to such clipping (max(.)) but extends to any kind of clipping.

According to this embodiment of the method, in step 909, the LDR frame $Res_c$ is encoded by means of an encoder ENC2.

Combining the scaling and clipping embodiments leads to a LDR frame image $Res_{sc}$ given by:

$$Res_{sc} = \max(2^N, cst_{scaling}*Res_v)$$

or by

$$Res_{sc} = \max(2^N, cst_{scaling}*Res_s)$$

according to the embodiments of the method.

According to this embodiment of the method, in step 909, the LDR frame $Res_{sc}$ is encoded by means of an encoder ENC2.

The tone-mapping and scaling of the viewable LDR frame $Res_v$ is a parametric process. The parameters may be fixed or not and in the latter case they may be encoded in the bitstream BF by means of the encoder ENC1.

According to an embodiment of the method, the constant value $\gamma$ of the gamma correction, the scaling factor $cst_{scaling}$ may be parameters which are encoded in the bitstream BF.

It may be noted that the choice of the parameters $\alpha$, $cst_{mod}$, $cst_{scaling}$, $\gamma, \beta$ gives room for the choice of the tone-mapping which suits the content the best following the taste of an expert in post-production and color grading.

On the other hand, universal parameters may be defined in order to be acceptable for all of a large variety of frames. Then, no parameters are encoded in the bitstream BF.

**Fig. 13** shows a block diagram of the steps of a method, in accordance with an embodiment of the disclosure, for decoding a bitstream representing LDR and the associated HDR illumination frames.

As explained above, in steps 1304 and 1305, an HDR illumination frame $\widehat{IF}$ is obtained for example by at least partially decoding a bitstream BF by means of the decoder DEC.

The bitstream BF may have been stored locally or received from a communication network.

In step 1301, a decoded LDR frame $\widehat{Res}$ is obtained by a at least partial decoding of a bitstream F by means of a decoder DEC2.

The bitstream F may have been stored locally or received from a communication network.

As explained below, the decoded LDR frame $\widehat{Res}$ is viewable by a traditional apparatus.

In step 1304, a decoded HDR frame $\hat{I}$ is obtained

by multiplying the decoded LDR frame $\widehat{Res}$ by the HDR illumination frame $\widehat{IF}$ .

According to an embodiment of step 1304, the parameters $\hat{\gamma}$ and/or $\widehat{cst_{scaling}}$ are also obtained either from a local memory or by a at least partial decoding of the bitstream BF by means of the decoder DEC1.

According to the method, in step 1302, a module ISCA applied an inverse scaling to the decoded LDR frame $\widehat{Res}$ by dividing the decoded LDR frame $\widehat{Res}$ by the parameter $\widehat{cst_{scaling}}$ .

In step 1303, a module ITMO applied an inverse-tone-mapping to the decoded LDR frame $\widehat{Res}$ , by means of the parameters $\hat{\gamma}$.

For example, the parameter $\hat{\gamma}$ defines a gamma curve and the inverse-tone-mapping is just to find, from the gamma curve, the values which correspond to the pixel values of the decoded LDR frame $\widehat{Res}$ .

The decoders DEC1, respectively DEC2, is configured to decode data which have been encoded by the encoder ENC1, respectively DEC2.

The encoders ENC1 and ENC2 (and decoders DEC1 and DEC2) are not limited to a specific encoder (decoder) but when an entropy encoder (decoder) is required, an entropy encoder such as a Huffmann coder, an arithmetic coder or a context adaptive coder like Cabac used in h264/AVC or HEVC is advantageous.

The encoders ENC1 and ENC2 (and decoders DEC1 and DEC2) are not limited to a specific encoder which may be, for example, an image/video coder with loss like JPEG, JPEG2000, MPEG2, h264/AVC or HEVC.

On **Fig. 1-13,** the modules are functional units, which may or not be in relation with distinguishable physical units. For example, these modules or some of them may be brought together in a unique component or circuit, or contribute to functionalities of a software. *A contrario,* some modules may potentially be composed of separate physical entities. The apparatus which are compatible with the invention are implemented using either pure hardware, for example using dedicated hardware such ASIC or FPGA or VLSI, respectively «Application Specific Integrated Circuit », « Field-Programmable Gate Array », « Very Large Scale Integration », or from several integrated electronic components embedded in a device or from a blend of hardware and software components.

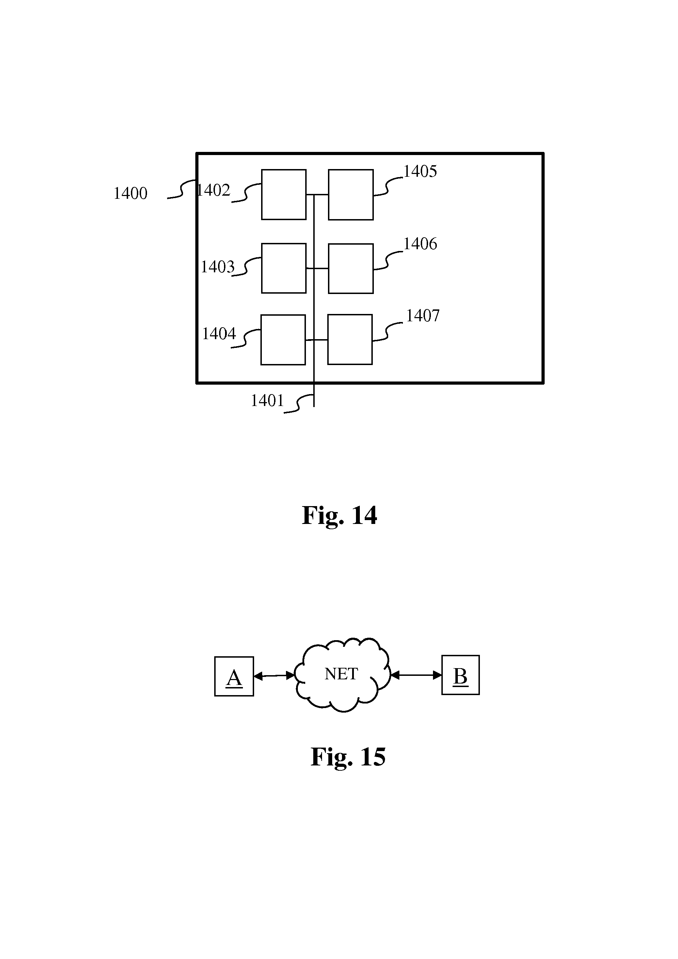

**Fig. 14** represents an exemplary architecture of a device 1400 which may be configured to implement a method described in relation with **Fig. 1-13.**

Device 1400 comprises following elements that are linked together by a data and address bus 1401:

- a microprocessor 1402 (or CPU), which is, for example, a DSP (or Digital Signal Processor);
- a ROM (or Read Only Memory) 1403;
- a RAM (or Random Access Memory) 1404;
- an I/O interface 1405 for reception of data to transmit, from an application; and
- a battery 1406.

According to a variant, the battery 1406 is external to the device. Each of these elements of **Fig. 14** are well-known by those skilled in the art and won't be disclosed further. In each of mentioned memory, the word « register » used in the specification can correspond to area of small capacity (some bits) or to very large area (e.g. a whole program or large amount of received or decoded data). ROM 1403 comprises at least a program and parameters. Algorithm of the methods according to the invention is stored in the ROM 1403. When switched on, the CPU 1402 uploads the program in the RAM and executes the corresponding instructions.

RAM 1404 comprises, in a register, the program executed by the CPU 1402 and uploaded after switch on of the device 1400, input data in a register, intermediate data in different states of the method in a register, and other variables used for the execution of the method in a register.

The implementations described herein may be implemented in, for example, a method or a process, an apparatus, a software program, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

According to a specific embodiment of encoding or encoder, the input HDR frame is obtained from a source. For example, the source belongs to a set comprising:

- a local memory (1403 or 1404), e.g. a video memory or a RAM (or Random Access Memory), a flash memory, a ROM (or Read Only Memory), a hard disk ;
- a storage interface (1405), e.g. an interface with a mass storage, a RAM, a flash memory, a ROM, an optical disc or a magnetic support;
- a communication interface (1405), e.g. a wireline interface (for example a bus interface, a wide area network interface, a local area network interface) or a wireless interface (such as a IEEE 802.11 interface or a Bluetooth® interface); and
- an frame capturing circuit (e.g. a sensor such as, for example, a CCD (or Charge-Coupled Device) or CMOS (or Complementary Metal-Oxide-Semiconductor)).

According to different embodiments of the decoding or decoder, the decoded frame FR and/or IF is sent to a destination; specifically, the destination belongs to a set comprising:

- a local memory (1403 or 1404), e.g. a video memory or a RAM, a flash memory, a hard disk ;
- a storage interface (1405), e.g. an interface with a mass storage, a RAM, a flash memory, a ROM, an optical disc or a magnetic support;
- a communication interface (1405), e.g. a wireline interface (for example a bus interface (e.g. USB (or Universal Serial Bus)), a wide area network interface, a local area network interface, a HDMI (High Definition Multimedia Interface) interface) or a wireless interface (such as a IEEE 802.11 interface, WiFi ® or a Bluetooth ® interface); and
- a display.

According to different embodiments of encoding or encoder, the bitstream F and the information data ID are sent to a destination. As an example, the bitstream F and the information data ID or both are stored in a local or remote memory, e.g. a video memory (1404) or a RAM (1404), a hard disk (1403). In a variant, either the bitstream F or the information data ID or both are sent to a storage interface (1405), e.g. an interface with a mass storage, a flash memory, ROM, an optical disc or a magnetic support and/or transmitted over a communication interface (1405), e.g. an interface to a point to point link, a communication bus, a point to multipoint link or a broadcast network.

According to different embodiments of decoding or decoder, the bitstream F and/or the information data ID is obtained from a source. Exemplarily, the bitstream and/or the information data ID is read from a local memory, e.g. a video memory (1404), a RAM (904), a ROM (1403), a flash memory (1403) or a hard disk (1403). In a variant, the bitstream and/or the information data ID is received from a storage interface (1405), e.g. an interface with a mass storage, a RAM, a ROM, a flash memory, an optical disc or a magnetic support and/or received from a communication interface (1405), e.g. an interface to a point to point link, a bus, a point to multipoint link or a broadcast network.

According to different embodiments, device 1400 being configured to implement an method described in relation with **Fig. 1,** belongs to a set comprising:

- a mobile device ;
- a communication device ;

- a game device ;
- a tablet (or tablet computer) ;
- a laptop ;
- a still image camera;
- a video camera ;
- an encoding chip;
- a still image server; and
- a video server (e.g. a broadcast server, a video-on-demand server or a web server).

According to different embodiments, device 1400 being configured to implement a method described in relation with **Fig. 2,** belongs to a set comprising:

- a mobile device ;
- a communication device ;
- a game device ;
- a set top box;
- a TV set;
- a tablet (or tablet computer) ;
- a laptop ;
- a display and
- a decoding chip.

According to an embodiment illustrated in **Fig. 15,** in a transmission context between two remote devices A and B over a communication network NET, the device A comprises means which are configured to implement a method as described in relation with the **Fig. 1** and the device B comprises means which are configured to implement a method as described in relation with **Fig. 2.**

According to a variant of the invention, the network is a broadcast network, adapted to broadcast still frames or video frames from device A to decoding devices including the device B.

Implementations of the various processes and features described herein may be embodied in a variety of different equipment or applications, particularly, for example, equipment or applications. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a computer readable storage medium. A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing as is readily appreciated by one of ordinary skill in the art: a portable computer diskette; a hard disk; a read-only memory (ROM); an erasable programmable read-only memory (EPROM or Flash memory); a portable compact disc read-only memory (CD-ROM); an optical storage device; a magnetic storage device; or any suitable combination of the foregoing.

The instructions may form an application program tangibly embodied on a processor-readable medium.

Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

**Claims**

1. A method for processing an information data indicating that a frame contains samples of at least two distinct packed constituent frames according to a specific frame-packing-arrangement scheme, **characterized in that** said method comprises defining that said information data indicates that one of the at least two distinct packed constituent frames corresponds to an LDR frame and another of the at least two distinct packed constituent frames corresponds to an HDR illumination frame associated with said LDR frame.

2. The method according to the claim 1, wherein the method further comprises defining that said information data ID indicates that the LDR and the associated HDR illumination frames do not have a same size and/or have specific positions in the frame.

3. The method according to the claim 2, wherein the method further comprises defining that said information data ID indicates a size and/or a position of the LDR frame and/or a size and/or a position of the associated HDR illumination frame.

4. The method according to one of the claims 2-3, wherein the specific frame packing arrangement scheme indicates that either the LDR frame and/or the associated HDR illumination frame is split in several pieces, and indicates the position of each piece in the frame.

5. A method for encoding an LDR frame and an associated HDR illumination frame in a bitstream, **characterized in that** the method comprises:

   - packing the LDR frame and the associated HDR illumination frame in a single frame according to a specific frame-packing-arrangement scheme;
   - encoding the single frame; and
   - processing an information data according to one of the claims 1-4.

6. The method according to the claim 5, wherein the single frame is encoded according to encoding parameters which depend on the specific frame-packing-arrangement scheme.

7. The method according to the claim 5 or 6, wherein it further comprises:

   - obtaining the LDR frame by tone-mapping a residual frame obtained by dividing an HDR image by a decoded version of an HDR illumination frame, said HDR illumination frame being obtained from the HDR image.

8. A method for decoding a bitstream representing an LDR frame and an associated HDR illumination frame comprising decoding, at least partially, the bitstream to get a decoded frame, **characterized in that** the method further comprises:

   - obtaining an information data indicating that the decoded frame contains samples of at least two distinct packed constituent frames according to a specific frame-packing-arrangement scheme;
   - checking if the information data indicates that one of the at least two distinct packed constituent frames corresponds to an LDR frame and another of the at least two distinct packed constituent frames corresponds to an HDR illumination frame associated with said LDR frame; and
   - obtaining the LDR frame and the associated HDR illumination frame from the decoded frame according to the specific frame-packing-arrangement scheme.

9. The method according to the claim 8, wherein the decoded frame is decoded according to decoding parameters which depend on the specific frame-packing-arrangement scheme.

10. The method according to the claim 8 or 9, wherein it further comprises:

    - inverse tone-mapping the LDR frame; and
    - multiplying the inverse-tone-mapped LDR frame by the associated HDR illumination frame.

11. A device for processing an information data indicating that a frame contains samples of at least two distinct packed constituent frames according to a specific frame-packing-arrangement scheme, **characterized in that** said device comprises processing means configured to define that said information data indicates that one of the at least two distinct packed constituent frames corresponds to an LDR frame and another of the at least two distinct packed constituent frames corresponds to an HDR illumination frame associated with said LDR frame.

12. A device for encoding LDR and the associated HDR illumination frames comprising processing means for:

- packing the LDR and the associated HDR illumination frames in a single frame according to a specific frame-packing-arrangement scheme;
- encoding the single frame; and
- processing of an information data according to one of the claims 1-4.

13. A device for decoding a bitstream representing LDR and the associated HDR illumination frames comprising a decoder for decoding, at least partially, the bitstream to get a decoded frame, **characterized in that** the device further comprises processing means configured to:

- obtain an information data indicating that the decoded frame contains samples of at least two distinct packed constituent frames according to a specific frame-packing-arrangement scheme;
- check if the information data indicates that one of the at least two distinct packed constituent frames corresponds to an LDR frame and another of the at least two distinct packed constituent frames corresponds to an HDR illumination frame associated with said LDR frame; and
- obtain the LDR and the associated HDR illumination frames from the decoded frame according to the specific frame-packing-arrangement scheme.

14. A computer program product comprising program code instructions to execute the steps of a method according to claim 1, 5 or 8 when this program is executed on a computer.

15. A processor readable medium having stored therein instructions for causing a processor to perform at least the steps of a method according to claim 1, 5 or 8.

16. Non-transitory storage medium carrying instructions of program code for executing steps of a method according to the claim 1, 5 or 8, when said program is executed on a computing device.

17. A method according to one of the claims 1-10 or an device according to one of the claims 11-13, wherein the information data is a SEI message.

18. Signal carrying a bitstream representing an LDR frame and an associated HDR illumination frame, **characterized in that** it carries an information data processed by a method according to one of the claims 1-4.

**Fig. 1**

**Fig. 2**

EP 2 938 083 A1

| frame_packing_arrangement( payloadSize ) { | C | Descriptor |
|---|---|---|
| frame_packing_arrangement_id | 5 | ue(v) |
| frame_packing_arrangement_cancel_flag | 5 | u(1) |
| if( !frame_packing_arrangement_cancel_flag ) { | | |
| frame_packing_arrangement_type | 5 | u(7) |
| quincunx_sampling_flag | 5 | u(1) |
| different_views_size_flag | 5 | u(1) |
| content_interpretation_type | 5 | u(6) |
| spatial_flipping_flag | 5 | u(1) |
| frame0_flipped_flag | 5 | u(1) |
| field_views_flag | 5 | u(1) |
| current_frame_is_frame0_flag | 5 | u(1) |
| frame0_self_contained_flag | 5 | u(1) |
| frame1_self_contained_flag | 5 | u(1) |
| if( !quincunx_sampling_flag && frame_packing_arrangement_type != 5 ) { | | |
| frame0_grid_position_x | 5 | u(4) |
| frame0_grid_position_y | 5 | u(4) |
| frame1_grid_position_x | 5 | u(4) |
| frame1_grid_position_y | 5 | u(4) |
| } | | |
| if(different_views_size_flag ) { | | |
| frame0_offset_x_ in_luma_samples | 5 | ue(v) |
| frame0_offset_y_ in_luma_samples | 5 | ue(v) |
| frame1_offset_x_ in_luma_samples | 5 | ue(v) |
| frame1_offset_y_ in_luma_samples | 5 | ue(v) |
| frame0_pic_width_in_luma_samples | 5 | ue(v) |
| frame0_pic_height_in_luma_samples | 5 | ue(v) |
| frame1_pic_width_in_luma_samples | 5 | ue(v) |
| frame1_pic_height_in_luma_samples | 5 | ue(v) |
| } | | |
| frame_packing_arrangement_reserved_byte | 5 | u(8) |
| frame_packing_arrangement_repetition_period | 5 | ue(v) |
| } | | |
| frame_packing_arrangement_extension_flag | 5 | u(1) |
| } | | |

**Fig. 3**

16

| Value | Interpretation |
|-------|----------------|
| 0 | Unspecified relationship between the frame packed constituent frames |
| 1 | Indicates that the two constituent frames form the left and right views of a stereo view scene, with frame 0 being associated with the left view and frame 1 being associated with the right view |
| 2 | Indicates that the two constituent frames form the right and left views of a stereo view scene, with frame 0 being associated with the right view and frame 1 being associated with the left view |
| 3 | Indicates that the two constituent frames form LDR and the associated HDR illumination frames, with frame 0 being associated with the LDR and frame 1 being associated with the HDR illumination. |

**Fig. 4**

| Value | Interpretation |
|---|---|
| 0 | Each component plane of the decoded frames contains a "checkerboard" based interleaving of corresponding planes of two constituent frames as illustrated in Figure D-1. |
| 1 | Each component plane of the decoded frames contains a column based interleaving of corresponding planes of two constituent frames as illustrated in Figure D-2 and Figure D-3. |
| 2 | Each component plane of the decoded frames contains a row based interleaving of corresponding planes of two constituent frames as illustrated in Figure D-4 and Figure D-5. |
| 3 | Each component plane of the decoded frames contains a side-by-side packing arrangement of corresponding planes of two constituent frames as illustrated in Figure D-6, Figure D-7, and Figure D-10. |
| 4 | Each component plane of the decoded frames contains a top-bottom packing arrangement of corresponding planes of two constituent frames as illustrated in Figure D-8 and Figure D-9. |
| 5 | The component planes of the decoded frames in output order form a temporal interleaving of alternating first and second constituent frames as illustrated in Figure D-11. |
| 6 | The decoded frame constitutes a complete 2D frame without any frame packing (see NOTE 6). |
| 7 | Each component plane of the decoded frames contains a tile format packing arrangement of corresponding planes of two constituent frames as illustrated in Figure D-12. |
| 8 | The component planes have different size defined by frame0_pic_width, frame0_pic_height, frame1_pic_width, frame1_pic_height. |

# Fig. 5

**Fig. 6**

**Fig. 7**

**Fig. 8**

**Fig. 9**

**Fig. 10**     **Fig. 11**     **Fig. 12**

**Fig. 13**

**Fig. 14**

**Fig. 15**

Europäisches
Patentamt

European
Patent Office

Office européen
des brevets

**EUROPEAN SEARCH REPORT**

Application Number

EP 14 30 5602

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 579 591 A1 (THOMSON LICENSING [FR]) 10 April 2013 (2013-04-10) <br> * paragraph [0002] - paragraph [0007] * <br> * paragraph [0009] - paragraph [0010] * <br> * paragraph [0018] * <br> * paragraph [0028] - paragraph [0032] * <br> * paragraph [0034] - paragraph [0037] * <br> * paragraph [0048] - paragraph [0052]; tables 2,3 * <br> * paragraph [0056] - paragraph [0065] * | 1-18 | INV. <br> H04N19/70 <br> H04N19/59 |
| Y | LASSERRE S ET AL: "High Dynamic Range video coding", <br> 16. JCT-VC MEETING; 9-1-2014 - 17-1-2014; SAN JOSE; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-P0159-v3, <br> 15 January 2014 (2014-01-15), XP030115678, <br> * page 1, paragraph 1 - page 2, paragraph 2; figures 1,2 * | 1-18 | |
| Y | CHOI B ET AL: "AHG9: On frame packing arrangement SEI", <br> 10. JCT-VC MEETING; 101. MPEG MEETING; 11-7-2012 - 20-7-2012; STOCKHOLM; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-J0247, 3 July 2012 (2012-07-03), XP030112609, <br> * page 2, paragraph 2 * <br> * page 4, paragraph 3 * | 1-18 | TECHNICAL FIELDS SEARCHED (IPC) <br><br> H04N <br> G06T |

-/--

The present search report has been drawn up for all claims

| Place of search | Date of completion of the search | Examiner |
|---|---|---|
| Munich | 17 October 2014 | Moschetti, Fulvio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 14 30 5602

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | NAKAGAMI O ET AL: "2D compatible frame packing arrangement SEI", 10. JCT-VC MEETING; 101. MPEG MEETING; 11-7-2012 - 20-7-2012; STOCKHOLM; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-J0070, 29 June 2012 (2012-06-29), XP030112432, * page 2, paragraph 3 - page 5; figures 3,4 * ----- | 1-18 | |
| Y | MARCO GRANGETTO ET AL: "Specification of a novel frame packing arrangement in the SEI message", 43. VCEG MEETING; 97. MPEG MEETING; 17-7-2011 - 22-7-2011; TORINO; (VIDEO CODING EXPERTS GROUP OF ITU-T SG.16),, no. VCEG-AQ11, 21 July 2011 (2011-07-21), XP030003853, * page 1, paragraph 1 - page 3, paragraph 2.2 * ----- | 1-18 | |
| A | SULLIVAN (MICROSOFT) G J: "Edits reflecting decisions recorded for frame packing arrangement SEI messages and display/cropping windows", 11. JCT-VC MEETING; 102. MPEG MEETING; 10-10-2012 - 19-10-2012; SHANGHAI; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-K0382, 18 October 2012 (2012-10-18), XP030113264, * page 7, paragraph D.1.25 - page 8, paragraph D.2.25 * ----- | 1-18 | TECHNICAL FIELDS SEARCHED (IPC) |

The present search report has been drawn up for all claims

| Place of search | Date of completion of the search | Examiner |
|---|---|---|
| Munich | 17 October 2014 | Moschetti, Fulvio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 14 30 5602

This annex lists the patent family members relating to the patent documents cited in the above-mentioned European search report.
The members are as contained in the European Patent Office EDP file on
The European Patent Office is in no way liable for these particulars which are merely given for the purpose of information.

17-10-2014

| Patent document cited in search report | Publication date | Patent family member(s) | Publication date |
|---|---|---|---|
| EP 2579591 A1 | 10-04-2013 | CN 103037215 A<br>EP 2579591 A1<br>EP 2579597 A1<br>JP 2013081170 A<br>KR 20130036730 A<br>US 2013083838 A1 | 10-04-2013<br>10-04-2013<br>10-04-2013<br>02-05-2013<br>12-04-2013<br>04-04-2013 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Advanced video coding for generic audiovisual Services. *SERIES H: AUDIOVISUAL AND MULTIMEDIA SYSTEMS, Recommendation ITU-T H.264, Telecommunication Standardization Sector of ITU,* February 2014
- High Efficiency Video Coding. *SERIES H: AUDIOVISUAL AND MULTIMEDIA SYSTEMS, Recommendation ITU-T H.265, Telecommunication Standardization Sector of ITU,* April 2013
- **REINHARD, E. ; STARK, M. ; SHIRLEY, P. ; FERWERDA, J.,.** Photographic tone reproduction for digital images. *ACM Transactions on Graphics,* July 2002, 21
- Temporal coherency for video tone mapping. **BOITARD, R. ; BOUATOUCH, K. ; COZOT, R. ; THOREAU, D. ; GRUSON, A.** Proc. SPIE 8499, Applications of Digital Image Processing. 2012, 84990D-84990D, 10